# EUROPEAN PATENT APPLICATION

(11) **EP 0 651 538 A1**
(43) Date of publication of application: **03.05.1995**
(21) Application number: 94116875.9
(22) Date of filing: 26.10.1994
(51) Int. Cl.: H04L 25/02

(54) **An interface for pulse width modulation communications**

(30) Priority: 29.10.1993 IT TO930815
(71) Applicant: MAGNETI MARELLI S.p.A., I-20145 Milano (IT)
(72) Inventor: Ferrari, Silvio, I-20082 Binasco (Milano) (IT)
(74) Representative: Marchitelli, Mauro

(57) **Abstract**

An interface for pulse width modulation communications (PWM) for a motor vehicle, based on the use of inverting logic gates (N, N1, N2) to exploit the logic level limiting effect (clamp) in association with low-pass filters (R1, R2, C1; R3, C2; R4, C3) of the RC type. The interface permits the use of a single signal wire without a dedicated ground wire, and a good immunity against electromagnetic disturbances (EMI).

## Description

The present invention relates generally to an interface for transmission of pulse width modulated analogue communication signals, and more specifically relates to an interface of this type particularly, although not exclusively, developed for automobile use.

Prior art interfaces for pulse width modulation communications, and in particular interfaces forming part of systems intended to operate in electromagnetically disturbed environments, typically use two wires for the communication. Of these wires one is used to transmit the signal itself whilst the other is utilised as a specific ground wire, that is to say it is dedicated to the wire used for the transmission of the signal. The dedicated ground wire makes it possible to obtain a good immunity against electromagnetic disturbances (also called EMI) thus making the communication reliable although having the obvious disadvantage of increasing the cost and complexity of the system as a whole.

The object of the present invention is that of providing an interface system which makes it possible to resolve all the above-indicated problems in a satisfactory manner.

According to the present invention this object is achieved thanks to an interface system having the characteristics indicated in the claims which follow the present description.

Further advantages and characteristics of the present invention will become apparent from the following detailed description in which reference is made to the attached drawings, provided purely by way of non-limitative example, in which:
Figure 1 is a schematic circuit representation of a first portion of the system according to the present invention;
Figure 2 is a schematic circuit representation of a second portion of the system according to the present invention; and
Figure 3 is a schematic circuit representation of an alternative embodiment of the portion of the system shown in Figure 2.

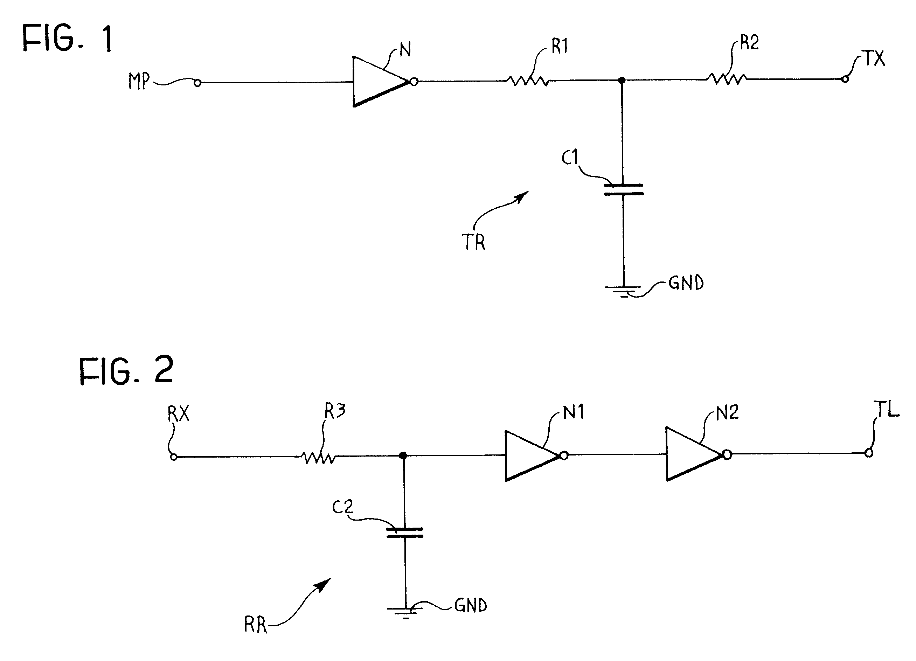

As can be seen from Figures 1 and 2 the interface system is very simple in its conception. In Figure 1 a transmitter unit TR is shown.

It comprises a logic gate of inverting type (commonly called a NOT gate) N which receives at an input terminal MP signals from a microprocessor (not illustrated). At the output of the inverting gate N is positioned a simple RC network formed by two resistors R1 and R2 connected in series and a capacitor C1 connected in parallel, that is to say connected between the common node between the resistors R1 and R2 and ground GND. This RC network is essentially a low-pass filter.

In the case of the present invention naturally the ground GND is a generic ground which is common to the whole system and is not specific and dedicated to the particular communication channel. To the output of the RC network is connected, by the transmission terminal TX, the wire (not illustrated) on which the communication takes place. As already mentioned this is a single wire.

On the other hand, Figure 2 shows a receiver unit RR. It has a receiver terminal RX connected to an RC network also serving as a low pass filter this time comprising a single resistor R3 and a capacitor C2. At the output of the RC network are connected two inverting logic gates N1 and N2. At the output of the inverting gates N1 and N2, on an output terminal TL, appears the reconstructed signal adapted to be utilised by the logic circuits.

This interface has the following important advantages. It makes it possible to utilise low cost components which are not specifically designed for the purpose. It is protected against short circuits and against voltage and energy peaks in the supply both at the transmitter portion TR and at the receiver portion RR. It minimises the effects produced by the so-called "ground shift" thereby permitting the use of a single communication wire referred to an even non-specific-ground. It has a good electromagnetic immunity and a low level of electromagnetic emission onto the cable. The system also permits the transmission of a pulse width modulated signal (PWM) and its reconstruction either as a pulse width modulated signal, or directly as an analogue quantity.

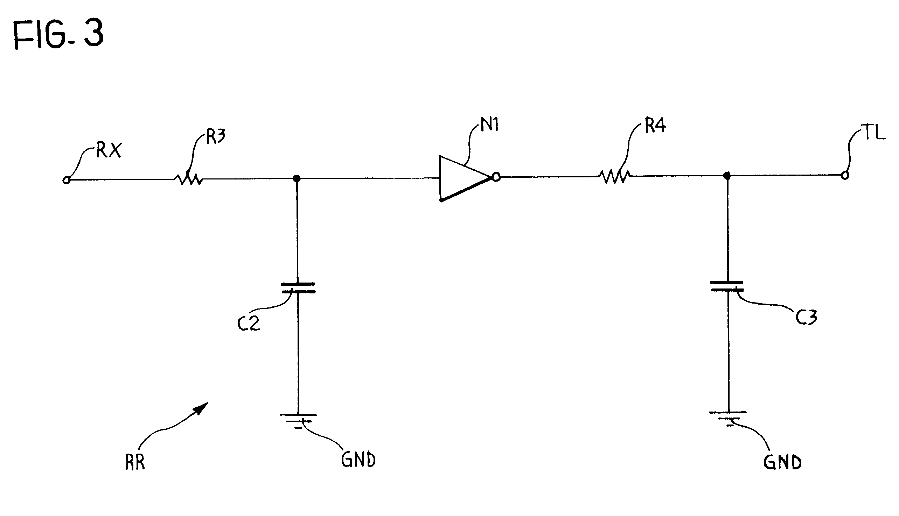

In Figure 3 is shown an alternative receiver unit RR able to convert the received pulse width modulated signal into an equivalent analogue signal. The unit RR of Figure 3 is substantially similar to that of Figure 2 with the difference that the second inverting gate N2 in this case is replaced by an RC network. This RC network, constituted by a resistor R4 and a capacitor C3, is also a low-pass filter and filters the pulse width modulated signal at the output from the inverting gate N1, which is therefore of digital type, into an analogue signal.

Typically the pulse width modulated signal is generated by a microprocessor central control unit connected by wires to a user's central control unit, or other device where the analogue quantity must be rendered available for utilisers and/or electromechanical and/or optical transducers.

The general operating principle of the present invention is based on the transmission of a signal at a peak-to-peak voltage (for example between GND and + 8V) which is higher than that effectively required in reception (for example between GND and +5V); however the excess peak-to-peak voltage is advantageously reduced to the logic supply by limit means. This is achieved by the use of inverting logic gates.

The action of the limiters (clamps) conditions a passage of current on the signal wire involving the contacts of all the connections interposed between transmission and reception.

The useful signal on the other hand works on a higher impedance, for example on the typical input impedance of a CMOS or HCMOS logic gate. If a CMOS or HCMOS logic gate is effectively used it is best that this logic circuit is provided with hysteresis (Schmitt-Trigger gate) to avoid bounce in the reconstruction of the pulse width modulated signal.

Naturally, the principle of the invention remaining the same, the details of construction and embodiments can be widely varied with respect to what has been described and illustrated, without by this departing from the ambit of the present invention.

## Claims

1. A communication system for pulse width modulation transmissions, capable of being installed on board a motor vehicle, comprising:
- transmitter means (TR) operatively connected to a first device,
- receiver means (RR) operatively connected to a second device,
- an electrical conductor connecting the said transmitter means to the said receiver means, the said first device being operable to generate pulse width modulated signals, intended for the said second device,
characterised by the fact that the said transmitter means (TR) comprise:
- an input terminal (MP),
- a first inverting logic circuit (N) having an input connected to the said input terminal (MP),
- a first filter (R1, R2, C1) having an input connected to an output of the said first inverting logic circuit (N),
- a transmission terminal (TX) connected to an output of the said first filter (R1, R2, C1),
and by the fact that the said receiver means (RR) comprise:
- a receiver terminal (RX),
- a second filter (R3, C2) having an input connected to the said receiver terminal (RX),
- a second inverting logic circuit (N1) having an input connected to an output of the said second filter (R3, C2),
- an output terminal (TL).

2. A system according to Claim 1, characterised in that the said receiver means (RR) also include a further inverting logic circuit (N2) interposed between the said second inverting logic circuit (N1) and the said output terminal (TL).

3. A system according to Claim 2, characterised in that the said receiver means (RR) also include a further filter (R4, C3) interposed between the said second inverting logic circuit (N1) and the said output terminal (TL).

4. A system according to Claim 2 or Claim 3, characterised in that the said inverting logic circuits (N, N1, N2) have hysteresis.

5. A system according to Claim 4, characterised in that the said inverting logic circuits (N, N1, N2) are circuits of the Schmitt trigger type).

6. A system according to Claim 4 or Claim 5, characterised in that the said filters (R1, R2, C1; R3, C2; R4, C3) are low pass filters.

7. A system according to Claim 6, characterised in that the said low pass filters (R1, R2, C1; R3, C2; R4, C3) comprise resistive-capacitive networks.

8. A system according to Claim 7, characterised in that the said first filter (R1, R2, C1) comprises two series resistors (R1, R2) and a parallel capacitor (C1).

9. A system according to Claim 7 or Claim 8, characterised in that the said second filter (R3, C2) and said further filter (R4, C3) each comprise a series resistor (R3, R4) and a parallel capacitor (C2, C3).

10. A system according to any of Claims from 1 to 9, characterised in that the said inverting logic circuits (N, N1, N2) are logic circuits made in CMOS technology.

11. A system according to any of Claims 1 to 9, characterised in that the said inverting logic circuits (N, N1, N2) are logic circuits made in HCMOS technology.

12. A system according to any preceding claim, characterised in that the said inverting logic circuits (N, N1, N2) have a high input impedance.
